# EUROPEAN PATENT SPECIFICATION

(11) **EP 3 940 298 B1**
(45) Date of publication and mention of the grant of the patent: **01.07.2026**
(21) Application number: 21185922.8
(22) Date of filing: 15.07.2021
(51) Int. Cl.: F24C 15/02, H05B 6/76, H05B 6/64

(54) **FOOD OVEN**
LEBENSMITTELOFEN
FOUR ALIMENTAIRE

(30) Priority: 16.07.2020 IT 202000017299
(43) Date of publication of application: 19.01.2022
(73) Proprietor: SMEG S.p.A., 42016 Guastalla (RE) (IT)
(72) Inventor: DALL'OGLIO, Alberto, 46029 Suzzara (MN) (IT); MASTILOVIC, Nebojsa, 42023 Cadelbosco Sopra (RE) (IT)
(74) Representative: Studio Torta S.p.A.

(56) References cited:
- EP-A1- 1 927 799
- EP-A1- 2 747 515
- EP-A1- 2 950 617
- DE-A1- 102015 102 981
- KR-A- 20070 053 927
- US-A1- 2015 122 805

## Description

### CROSS-REFERENCE TO RELATED APPLICATIONS

This patent application claims priority from Italian patent application no. 102020000017299 filed on July 16, 2020.

### TECHNICAL FIELD

The present invention relates to a food oven.

The technical field of reference for the present invention is that of ovens (domestic and professional) for the cooking and/or the heating of food without limitations in terms of type of cooking and/or heating. In such sense, an oven according to the present invention can be an electric oven, a gas oven, a steam or humidified cooking oven, a microwave oven, or a hybrid oven having various cooking modes.

### BACKGROUND OF THE INVENTION

As is known, domestic or professional ovens for the cooking and/or the heating of food comprise a particular internal structure, known in the field as muffle, which defines the cooking chamber. On the outside of the muffle, an outer frame is present and between the muffle and such outer frame all the devices for the correct functioning of the oven are present. The oven is further provided with a door for the selective closing of the cooking chamber. As is known, the door is movable between a first position, in which it closes the cooking chamber so as to reduce the dispersion of the cooking heat, and a second position in which it allows the user to access the cooking chamber.

During the cooking with the door closed, it is of fundamental importance to prevent the dispersion of heat and of fluids from the cooking chamber towards the outside. For this reason, the ovens of known type are provided with a sealing system capable of limiting the leakage of heat and of fluids from the cooking chamber.

However, the sealing systems at disposal to date differ from one another depending on the type of cooking and/or heating of the oven and, moreover, require for the oven to have a different structure depending on the type of cooking and/or heating. This causes high industrialization and production costs of food ovens.

Examples of such solutions are described in US20150122805, EP2950617, EP2747515, EP1927799 and KR20070053927.

### SUMMARY OF THE INVENTION

Therefore, an object of the present invention is to provide a food oven which is devoid of the drawbacks of the prior art highlighted herein; in particular, an object of the present invention is to manufacture a food oven which allows overcoming the drawbacks highlighted above in a simple and cost-effective manner, both from the functional point of view, and from the constructional point of view.

In accordance with such objects, the present invention relates to a food oven as claimed in claim 1.

The food oven according to the present invention advantageously has a structure compatible with all the different types of heating.

In particular, the groove is shaped so as to house all the types of sealing elements depending on the heating technology(ies) used.

Moreover, the coupling area between the muffle and the front panel is strategically positioned along the back wall of the groove, which, in use, is protected by the sealing element.

According to an embodiment of the invention, the edge of the muffle comprises a hem with a rounded section profile. In this manner, the edge of the muffle can be homogeneously enamelled.

According to an embodiment of the invention, the oven comprises fixing means configured to secure the at least one sealing element in the groove. Preferably, the fixing means comprise a plurality of holes made along the back wall of the groove and a plurality of fastening elements configured to engage the respective holes. In this manner, the sealing element is firmly secured in the groove and the sealing is ensured during the use.

According to an embodiment of the invention, the at least one sealing element comprises a main body shaped so as to engage the groove, a first sealing strip, which protrudes from the main body for cooperating in abutment with the door of the oven, and at least one second sealing strip, which protrudes from the main body in such a way that it substantially covers one hem of the edge of the muffle.

Preferably, the first sealing strip and the second sealing strip protrude from an angular portion of the main body, which protrudes from the first side wall of the groove.

In this manner, the sealing element can ensure the sealing to the microwaves and to the steam.

According to an embodiment of the invention, the groove is shaped so as to comprise rounded edges. In this manner, the groove can be uniformly and lastingly enamelled.

According to an embodiment of the invention, the edge of the muffle defines a first face, which faces the groove, a second face, which faces the opening and a hem, which joins the first face and the second face; the distance between the first face and the second face being within an optimal range. In this manner, the distance between the sealing element and the opening of the muffle is optimised for the sealing.

### BRIEF DESCRIPTION OF THE DRAWINGS

Further characteristics and advantages of the present invention will be apparent from the following description of a non-limiting embodiment example thereof, with reference to the figures of the accompanying drawings, wherein:
- Figure 1 is a schematic perspective view, with parts removed for clarity, of a food oven according to the present invention;
- Figure 2 is a schematic front view, with parts removed for clarity, of a first detail of the oven of Figure 1;
- Figure 3 is a schematic sectional view, with parts removed for clarity, of a second detail of the oven of Figure 1;
- Figure 4 is a schematic sectional view, with parts removed for clarity, of the second detail of Figure 3 wherein some geometric parameters are highlighted;
- Figure 5 is a schematic sectional view, with parts removed for clarity, of the second detail of Figure 3 in a particular operating configuration.

### DETAILED DESCRIPTION OF THE INVENTION

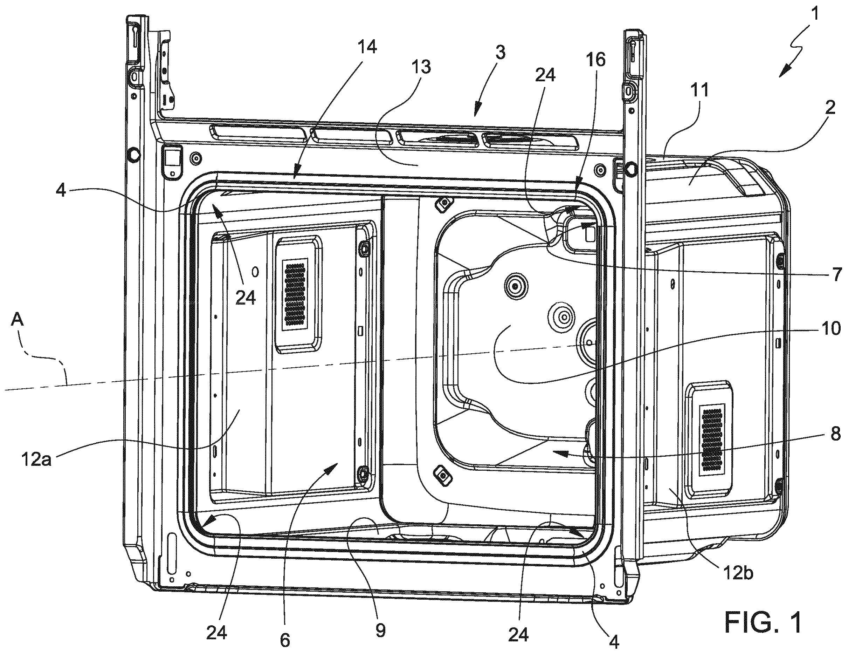

In Figure 1, a food oven 1 is partially illustrated according to an embodiment of the present invention.

The oven 1 comprises a muffle 2 extending along a longitudinal axis A, a frame 3 (visible only in part), at least one sealing element 4 and a door (not illustrated in the accompanying figures).

The muffle 2 is configured to define a cooking cavity 6 and has a perimeter edge 7. The edge 7 is configured to define an opening 8 for the access to the cooking cavity 6. The opening extends substantially around the longitudinal axis A. In particular, the opening 8 extends along a plane substantially orthogonal to the longitudinal axis A.

In particular, the muffle 2 comprises a floor wall 9, a rear wall 10, a roof wall 11 and two side walls 12a and 12b. The rear wall 10 is substantially orthogonal to the axis A and is arranged opposite the opening 8 along the longitudinal axis A. The floor wall 9 is arranged opposite the roof wall 11 with respect to the longitudinal axis A. The side walls 12a and 12b are arranged opposite with respect to the longitudinal axis A and extend between the floor wall 9 and the roof wall 11.

The floor wall 9, the rear wall 10, the roof wall 11 and the side walls 12a and 12b are interconnected to one another or directly made in a single piece. Preferably, the floor wall 9, the rear wall 10, the roof wall 11 and the side walls 12a and 12b of the muffle 2 are defined by deep-drawn metal sheets.

The side walls 12a and 12b of the muffle 2 comprise supports or guides (not illustrated for simplicity) configured to support at least one shelf for dividing the cooking chamber into sub-chambers. As is known, such shelves allow cooking several dishes simultaneously or moving the dishes closer to the roof wall if, for example, a resistor for particular types of cooking is present.

The frame 3 envelops the muffle 2 and comprises a front panel 13 and other structural elements coupled to one another and not illustrated for simplicity in the accompanying figures. In the interspace between the muffle 1 and the frame 3, the devices designated for the correct functioning of the oven 1 are housed. Since the present invention is independent of the type of cooking offered by the oven 1, in Figure 1 the heating devices and the remaining structural elements of the frame 3 have not been suitably shown.

The front panel 13 is coupled to the muffle 2 and is configured to surround the opening 8 of the muffle 2. In particular, the front panel 13 is provided with an opening 14 sized in such a way to house the muffle 2 and in such a way that the front panel 13 surrounds the opening 8 of the muffle 2.

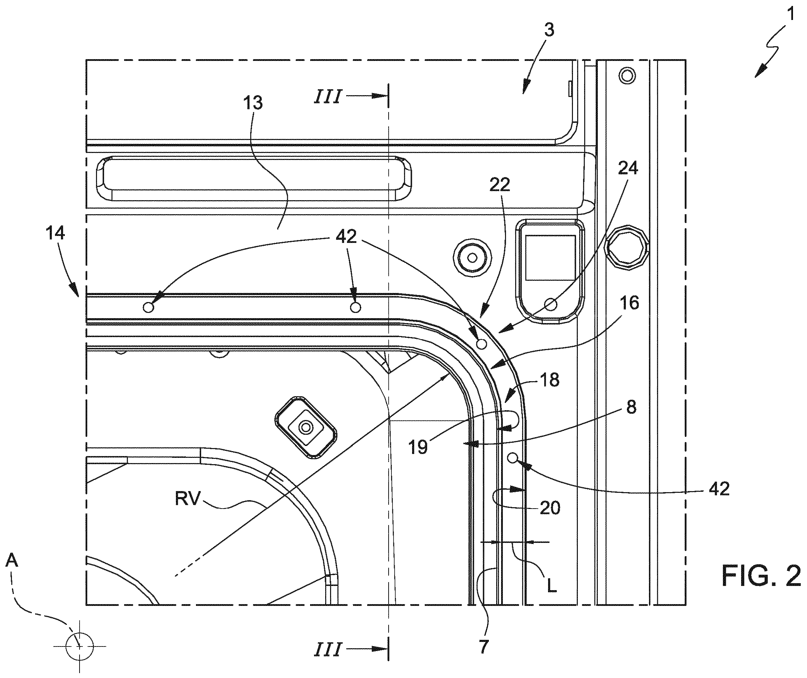

With reference to Figures 1 and 2, the front panel 13 and the muffle 2 are shaped to define a groove 16, which surrounds the opening 8 of the muffle 2 and is configured to house the sealing element 4.

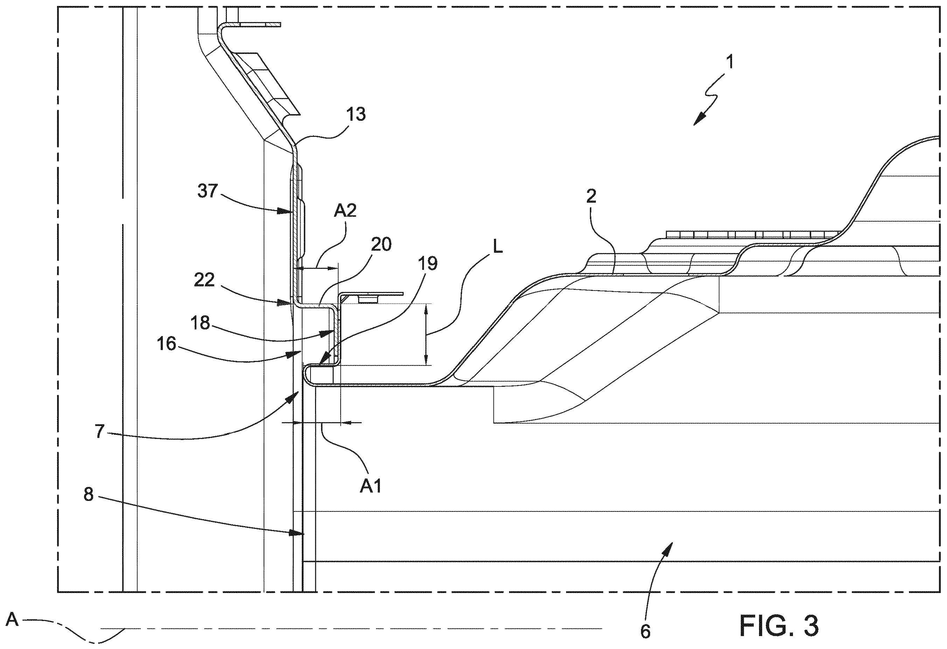

With reference to Figure 2 and to Figure 3, the groove 16 has a substantially U-shaped section and is defined by a back wall 18, by a first side wall 19, arranged proximal to the opening 8 of the muffle 2 and by a second side wall 20, arranged distal to the opening 8 of the muffle 2.

The back wall 18 is arranged substantially orthogonal to the axis A.

The first side wall 19 and the second side wall 20 extend parallel to the axis A.

The first side wall 19 has an axial height A1 lower than the axial height A2 of the second side wall 20. Height is understood as the measure along the axis A and, therefore, along a direction orthogonal to the back wall 18 of the groove 16.

In particular, the difference between the axial height A2 of the second side wall 20 and the axial height A1 of the first side wall 19 is preferably of at least 1 mm.

Preferably the axial height A2 of the second side wall is of at least 8 mm.

The back wall 18 preferably has a length L, understood as the measure along a direction orthogonal to the axis A, of at least 10 mm.

In the non-limiting example described and illustrated herein, the first side wall 19 is part of the muffle 2 and the second side wall 20 is part of the front panel 13. The front panel 13 and the muffle 2 are coupled to one another along the back wall 18 of the groove 16, preferably by welding.

With reference to Figure 3, the first side wall 19 is defined by the edge 7 of the muffle 2. The second side wall 20 is defined by a recess 22 of the front panel 13.

The edge 7 of the muffle 2 is substantially defined by a folding of the sheets that define the floor wall 9, the rear wall 10, the roof wall 11 and the side walls 12a and 12b.

Preferably, the edge 7 of the muffle 2 is shaped so as to define a substantially rectangular or square opening 8 devoid of sharp edges.

In other words, the edge 7 of the muffle 2 is shaped so that the opening 8 has rounded vertexes 24.

With reference to Figure 2, along a plane orthogonal to the axis A, the edge 7 is curved at the vertexes 24 of the opening 8. Preferably, at the vertexes 24 of the opening 8 and along the plane orthogonal to the axis A, the edge 7 has a radius of curvature RV preferably of at least 25 mm

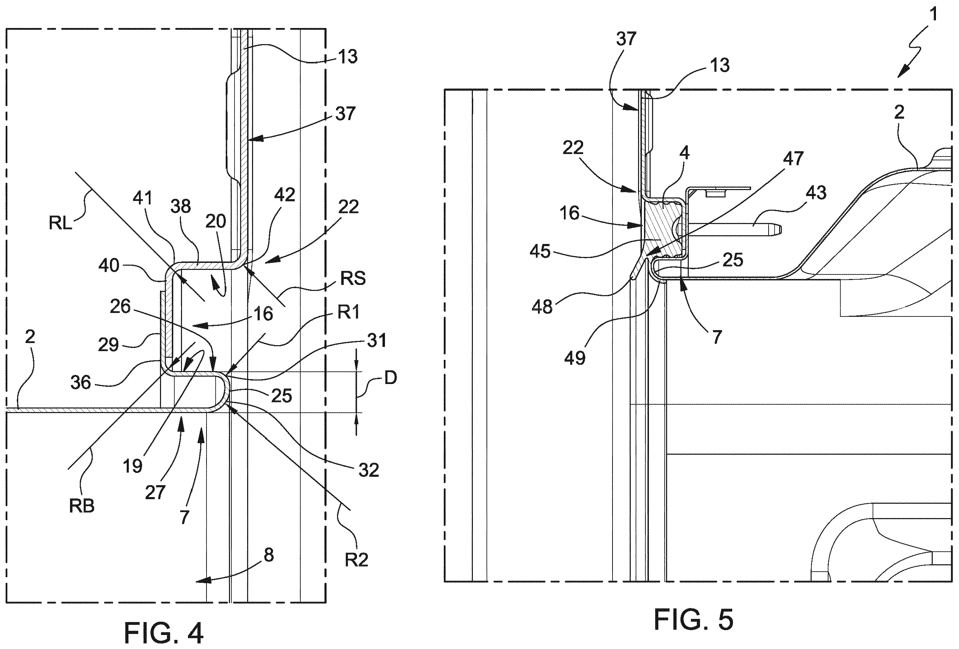

With reference to Figure 3 and to Figure 4, along a section plane parallel to the longitudinal axis A, the edge 7 of the muffle 2 defines a hem 25 preferably having a rounded section profile.

With reference to Figure 4, the edge 7 of the muffle 2 defines a first face 26, which faces the groove 16, a second face 27 which faces the opening 8, and a strip 29, which protrudes from the first face 26, preferably orthogonal to the first face 26. The hem 25 joins the first face 26 and the second face 27.

Preferably, the distance D between the first face 26 and the second face 27 being within an optimal range.

Preferably, the section profile of the hem 25 is a substantially asymmetric rounded profile, which has a first side 31 having a first radius of curvature and a second side 32 having a second radius of curvature different from the first one. In the non-limiting example described and illustrated herein, the first side 31 abuts on the second face 26 and substantially faces the groove 16, while the second side 32 abuts on the second face 27 and faces the opening 8.

The first face 26 substantially defines the face of the first side wall 19 of the groove 16

The radius of curvature R1 of the first side 31 is preferably smaller than the radius of curvature R2 of the second side 32.

Preferably, the second side 32 has a radius of curvature R2 of at least 2 mm, while the first side 31 has a radius of curvature R1 of at least 1 mm.

A variant not illustrated provides for the rounded section profile of the edge 7 to be symmetric and thus for the first side and the second side to have the same radius of curvature.

The strip 29 protrudes orthogonally from the first face 26. Preferably, the connection 36 between the strip 29 and the first face 26 is rounded. In particular the connection 36 is concave and has a radius of curvature RB greater than 1 mm.

With reference to Figure 2, the recess 22 of the front panel 13 follows the shape of the edge 7 so that the groove 16 has constant dimensions (in particular constant width) along the path around the opening 8.

Therefore, it too, along a plane orthogonal to the axis A, is curved at the vertexes 24 of the opening 8. Preferably, at the vertexes 24 of the opening 8 and along the plane orthogonal to the axis A, the recess 22 of the front panel 13 has the same radius of curvature of the edge 7.

With reference to Figure 3 and to Figure 4, the front panel 13 comprises a bearing face 37, which, in use, defines a bearing surface for the door of the oven 1, and the recess 22. The bearing face 37 extends along a plane and the recess 22 defines a portion of the front panel 13 set back with respect to such plane towards the rear wall 10 of the muffle 2.

The recess 22 is shaped so as to define a side 38 orthogonal to the bearing face 37 and a strip 40 orthogonal to the side 38. Therefore, the strip 40 is substantially parallel to the bearing face 37.

The side 38 substantially defines the second side wall 20 of the groove 16.

The recess 22 defines an edge 42 between the bearing face 37 and the side 38. Preferably, the edge 42 is rounded. Preferably, the edge 42 is convex and has a radius of curvature RS greater than 1 mm.

Preferably, the connection 41 between the strip 40 and the side 38 is rounded. In particular, the connection 41 between the strip 40 and the side 38 is concave and has a radius of curvature RL greater than 1 mm.

Preferably, the front panel 13 is made in a single piece.

The strip 29 of the muffle 2 and the strip 40 of the front panel 13 overlap and are coupled to one another, preferably by welding.

In other words, the back wall 18 of the groove 16 is defined by the strip 29 and by the strip 40 at least partially overlapped.

Essentially, the groove 16 defined by the muffle 2 and by the front panel 13 is devoid of sharp edges. All the edges of the groove 16, in fact, are rounded.

Preferably, the back wall 18 is provided with a plurality of coupling elements 42 (visible only in Figure 2), configured to cooperate with respective further coupling elements of the sealing element 4.

In the non-limiting example described and illustrated herein, the coupling elements 42 are through holes made along the back wall 18 and configured to cooperate with pins 43 (Figure 5) for securing the sealing element 4 to the groove 16.

According to a variant not illustrated, the coupling holes 42 cooperate with hooking elements.

Preferably, the coupling elements 42 are arranged equidistant along the back wall 18.

The groove 16 shaped and sized in such manner can be subjected to the enamelling process. Such process is normally adopted for covering only the faces of the muffle 2 that face the cooking cavity 6. The specific shape of the groove 16 further allows obtaining a uniform and lasting enamelling. This increases the reliability of the oven 1.

In Figure 5, a sealing element 4 is represented in accordance with a first embodiment.

In particular, the sealing element 4 illustrated in Figure 5 is a sealing element preferably indicated for ovens capable of producing three different heating modes (by means of resistors, by means of steam and by means of microwaves) which can be combined with one other.

The sealing element 4 is provided with a main body 45 shaped so as to engage the groove 16. In particular, the main body 45 is housed in the groove 16 so as to be arranged in abutment against the side walls 19 and 20 and so as to have an angular portion 47, which protrudes from the first side wall 19 of the groove 16. The sealing element 4 comprises a first strip 48, which protrudes from the angular portion 47 towards the door and a second strip 49, which protrudes from the angular portion 47 for substantially covering the hem 25 of the edge 7 of the muffle 2.

The sealing element 4 is secured to the back wall 18 of the groove 16 with the pins 43, which engage the holes 42 of the back wall 18.

The sealing element 4 manufactured in such manner ensures an optimal sealing of the microwaves and, at the same time, of the steam.

It is understood that the groove 16 is shaped so as to house sealing elements also of different type and indicated for ovens capable of producing other different heating modes.

For example, in the groove 16 it is possible to house sealing elements specifically made for a microwave oven (not illustrated) and shaped so as to slightly protrude from the plane defined by the bearing face 37 and thus allow the door to effectively produce the sealing of the electromagnetic radiations in the cooking cavity 6.

Alternatively, in the groove 16 it is possible to house sealing elements made for a traditional oven provided only with resistors for the heating (not illustrated), having a prominent lip so as to be arranged, in use, in abutment against the door.

A further alternative not illustrated, provides for a tubular sealing element made of knitted fibreglass (suitable for pyrolysis temperatures) to be housed in the groove 16. The diameter and the deformability of the sealing element manufactured in such manner define the correct abutment against the door and the correct distance from the bearing face.

A further alternative not illustrated provides for a sealing element specifically designed for a steam oven (pure and/or combined) having at least one steam sealing lip to be housed in the groove 16.

Essentially, the groove 16 shaped in accordance with the present invention allows housing different types of sealing elements without requiring any operation of structural adjustment of the muffle 2 and/or of the frame 3.

Finally, it is evident that modifications and variants can be made to the oven described herein without thereby departing from the scope of the appended claims.

## Claims

1. Food oven comprising:
- a muffle (2) extending along a longitudinal axis (A) and configured to define a cooking cavity (6); the muffle (2) having an edge (7) configured to define an opening (8) for the access to the cooking cavity (6); the opening (8) extending around the longitudinal axis (A);
- a front panel (13) coupled to the muffle (2) and configured to surround the opening (8) of the muffle (2);
- at least one sealing element (4);
the front panel (13) and the muffle (2) being shaped to define a groove (16), which surrounds the opening (8) of the muffle (2) and is configured to house the at least one sealing element (4); the groove (16) being defined by a back wall (18), a first side wall (19) proximal to the opening (8) and a second side wall (20) distal to the opening (8); the first side wall (19) being defined by the edge (7) of the muffle (2); wherein the second side wall (20) is defined by a recess (22) of the front panel (13); wherein the muffle (2) and the front panel (13) are coupled along the back wall (18) of the groove (16); wherein the back wall (18) is substantially arranged orthogonal to the axis (A); the oven being **characterized in that** the first side wall (19) has an axial height (A1) lower than the axial height (A2) of the second side wall (20)

2. Oven according to claim 1, wherein the muffle (2) and the front panel (13) are joined together by welding.

3. Oven according to any of the above claims, wherein the edge (7) of the muffle (2) comprises a hem (25) with a rounded section profile.

4. Oven according to any of the above claims, comprising fixing means (42; 43) configured to secure the at least one sealing element (4) in the groove (16).

5. Oven according to claim 4, wherein the fixing means comprise a plurality of holes (42) made along the back wall (18) of the groove (16) and a plurality of fastening elements (43) configured to engage the respective holes (42).

6. Oven according to any of the above claims, wherein the at least one sealing element (4) comprises a main body (45) shaped so as to engage the groove (16).

7. Oven according to claim 6, wherein the at least one sealing element (4) comprises at least one first sealing strip (48; 49), which protrudes from the main body (45).

8. Oven according to claim 7, wherein the at least one sealing element (4) comprises at least one second sealing strip (49), which protrudes from the main body (45) .

9. Oven according to claim 8, wherein the first sealing strip (48) and the second sealing strip (49) protrude from an angular portion (47) of the main body (45), which protrudes from the first side wall (19) of the groove (16).

10. Oven according to claim 9, wherein the second sealing strip (49) is arranged in such a way that it substantially covers one hem (25) of the edge (7) of the muffle (2).

11. Oven according to any of the above claims, wherein the groove (16) is shaped so as to comprise rounded edges (41, 42, 31, 32, 36).

## Patentansprüche

1. Lebensmittelofen, umfassend:
- eine Muffel (2), die sich entlang einer Längsachse (A) erstreckt und ausgelegt ist, um einen Garraum (6) zu definieren, wobei die Muffel (2) einen Rand (7) aufweist, der ausgelegt ist, um eine Öffnung (8) für den Zugang zu dem Garraum (6) zu definieren, wobei sich die Öffnung (8) um die Längsachse (A) herum erstreckt;
- eine Frontplatte (13), die mit der Muffel (2) gekoppelt und ausgelegt ist, um die Öffnung (8) der Muffel (2) zu umgeben;
- mindestens ein Dichtungselement (4),
wobei die Frontplatte (13) und die Muffel (2) so ausgeformt sind, dass sie eine Nut (16) definieren, die die Öffnung (8) der Muffel (2) umgibt und ausgelegt ist, um das mindestens eine Dichtungselement (4) aufzunehmen, wobei die Nut (16) durch eine Rückwand (18), eine erste Seitenwand (19) proximal zu der Öffnung (8) und eine zweite Seitenwand (20) distal zu der Öffnung (8) definiert ist, wobei die erste Seitenwand (19) durch den Rand (7) der Muffel (2) definiert ist, wobei die zweite Seitenwand (20) durch eine Aussparung (22) der Frontplatte (13) definiert ist, wobei die Muffel (2) und die Frontplatte (13) entlang der Rückwand (18) der Nut (16) gekoppelt sind, wobei die Rückwand (18) im Wesentlichen orthogonal zu der Achse (A) angeordnet ist, wobei der Ofen **dadurch gekennzeichnet ist, dass** die erste Seitenwand (19) eine axiale Höhe (A1) aufweist, die geringer ist als die axiale Höhe (A2) der zweiten Seitenwand (20).

2. Ofen nach Anspruch 1, wobei die Muffel (2) und die Frontplatte (13) durch Schweißen miteinander verbunden sind.

3. Ofen nach einem der vorhergehenden Ansprüche, wobei der Rand (7) der Muffel (2) einen Saum (25) mit einem abgerundeten Querschnittsprofil aufweist.

4. Ofen nach einem der vorhergehenden Ansprüche, umfassend Fixiermittel (42; 43), die ausgelegt sind, um das mindestens eine Dichtungselement (4) in der Nut (16) zu sichern.

5. Ofen nach Anspruch 4, wobei die Befestigungsmittel eine Vielzahl von Löchern (42) umfassen, die entlang der Rückwand (18) der Nut (16) ausgebildet sind, und eine Vielzahl von Befestigungselementen (43), die ausgelegt sind, um in die jeweiligen Löcher (42) einzugreifen.

6. Ofen nach einem der vorhergehenden Ansprüche, wobei das mindestens eine Dichtungselement (4) einen Hauptkörper (45) umfasst, der so ausgeformt ist, dass er in die Nut (16) eingreift.

7. Ofen nach Anspruch 6, wobei das mindestens eine Dichtungselement (4) mindestens einen ersten Dichtungsstreifen (48; 49) umfasst, der aus dem Hauptkörper (45) herausragt.

8. Ofen nach Anspruch 7, wobei das Dichtungselement (4) mindestens einen zweiten Dichtungsstreifen (49) umfasst, der aus dem Hauptkörper (45) herausragt.

9. Ofen nach Anspruch 8, wobei der erste Dichtungsstreifen (48) und der zweite Dichtungsstreifen (49) aus einem winkeligen Abschnitt (47) des Hauptkörpers (45) herausragen, der aus der ersten Seitenwand (19) der Nut (16) herausragt.

10. Ofen nach Anspruch 9, wobei der zweite Dichtungsstreifen (49) so angeordnet ist, dass er einen Saum (25) des Rands (7) der Muffel (2) im Wesentlichen abdeckt.

11. Ofen nach einem der vorhergehenden Ansprüche, wobei die Nut (16) so ausgeformt ist, dass sie abgerundete Ränder (41, 42, 31, 32, 36) aufweist.

## Revendications

1. Four alimentaire comprenant :
- un moufle (2) s'étendant le long d'un axe (A) longitudinal et configuré pour définir une cavité de cuisson (6) ; le moufle (2) ayant un bord (7) configuré pour définir une ouverture (8) pour l'accès à la cavité de cuisson (6) ; l'ouverture (8) s'étendant autour de l'axe (A) longitudinal ;
- un panneau avant (13) couplé au moufle (2) et configuré pour encercler l'ouverture (8) du moufle (2) ;
- au moins un élément d'étanchéité (4) ;
le panneau avant (13) et le moufle (2) étant façonnés pour définir une rainure (16), qui encercle l'ouverture (8) du moufle (2) et est configurée pour loger l'au moins un élément d'étanchéité (4) ; la rainure (16) étant définie par une paroi arrière (18), une première paroi latérale (19) proximale à l'ouverture (8) et une seconde paroi latérale (20) distale à l'ouverture (8) ; la première paroi latérale (19) étant définie par le bord (7) du moufle (2) ; dans lequel la seconde paroi latérale (20) est définie par un évidement (22) du panneau avant (13) ; dans lequel le moufle (2) et le panneau avant (13) sont couplés le long de la paroi arrière (18) de la rainure (16) ; dans lequel la paroi arrière (18) est agencée de manière sensiblement orthogonale à l'axe (A) ; le four étant **caractérisé en ce que** la première paroi latérale (19) possède une hauteur axiale (A1) inférieure à la hauteur axiale (A2) de la seconde paroi latérale (20).

2. Four selon la revendication 1, dans lequel le moufle (2) et le panneau avant (13) sont assemblés par soudage.

3. Four selon l'une quelconque des revendications précédentes, dans lequel le bord (7) du moufle (2) comprend un ourlet (25) doté d'un profil de section arrondi.

4. Four selon l'une quelconque des revendications précédentes, comprenant des moyens de fixation (42 ; 43) configurés pour maintenir l'au moins un élément d'étanchéité (4) dans la rainure (16).

5. Four selon la revendication 4, dans lequel les moyens de fixation comprennent une pluralité de trous (42) formés le long de la paroi arrière (18) de la rainure (16) et une pluralité d'éléments de rattachement (43) configurés pour se mettre en prise avec les trous (42) respectifs.

6. Four selon l'une quelconque des revendications précédentes, dans lequel l'au moins un élément d'étanchéité (4) comprend un corps principal (45) façonné de manière à se mettre en prise avec la rainure (16).

7. Four selon la revendication 6, dans lequel l'au moins un élément d'étanchéité (4) comprend au moins une première bande d'étanchéité (48 ; 49), qui fait saillie à partir du corps principal (45).

8. Four selon la revendication 7, dans lequel l'au moins un élément d'étanchéité (4) comprend au moins une seconde bande d'étanchéité (49) qui fait saillie à partir du corps principal (45).

9. Four selon la revendication 8, dans lequel la première bande d'étanchéité (48) et la seconde bande d'étanchéité (49) font saillie à partir d'une partie angulaire (47) du corps principal (45), qui fait saillie à partir de la première paroi latérale (19) de la rainure (16).

10. Four selon la revendication 9, dans lequel la seconde bande d'étanchéité (49) est agencée d'une manière telle qu'elle recouvre sensiblement un ourlet (25) du bord (7) du moufle (2).

11. Four selon l'une quelconque des revendications précédentes, dans lequel la rainure (16) est façonnée de manière à comprendre des bords arrondis (41, 42, 31, 32, 36).
